(19) Europäisches Patentamt
European Patent Office
Office européen des brevets

(11) **EP 3 783 509 A1**

(12) **EUROPEAN PATENT APPLICATION**
published in accordance with Art. 153(4) EPC

(43) Date of publication:
**24.02.2021 Bulletin 2021/08**

(51) Int Cl.:
***G06F 17/50*** (2006.01)

(21) Application number: **19789439.7**

(22) Date of filing: **01.02.2019**

(86) International application number:
**PCT/JP2019/003634**

(87) International publication number:
**WO 2019/202813 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.04.2018 JP 2018081565**

(71) Applicant: **Nihon Unisys, Ltd.**
**Tokyo 135-8560 (JP)**

(72) Inventor: **TSUCHIE Shoichi**
**Tokyo 135-8560 (JP)**

(74) Representative: **Vossius & Partner**
**Patentanwälte Rechtsanwälte mbB**
**Siebertstrasse 3**
**81675 München (DE)**

(54) **CURVED SURFACE GENERATION DEVICE, AND PROGRAM FOR CURVED SURFACE GENERATION**

(57) A surface generation device includes: a profile curve setting unit 2 configured to set a profile curve fitted to a part of shape data, a profile curve movement unit 3 configured to move the profile curve so as to satisfy a predetermined condition, and a surface generation unit 4 configured to generate a surface defined by a locus obtained by moving the profile curve satisfying the predetermined conditions. The predetermined conditions include the condition that a magnitude of a torsion of an intersecting curve between surfaces generated by the moved profile curve is minimized. In this way, it is possible to efficiently obtain a high-quality surface where a torsion of an intersecting curve of adjacent surfaces is small without repeating trial and error many times.

FIG. 1

EP 3 783 509 A1

**Description**

Technical Field

The present invention relates to a surface generation device and a surface generation program, and more particularly, a surface generation device for generating a surface of a smooth change in curvature desirable in the field of design.

Background Art

In general, in order to design a product, computer aided design (CAD) is used to generate shape data of the product. As a method of generating the shape data, a method of reconstructing a surface model of an object using CAD from measurement data of the object as a model is widely employed. For example, in the case of a surface shape of an automobile, CAD data are generated from measurement data of a clay model modeled by a clay modeler using a clay spatula (curve ruler).

In order to reconstruct the surface model from the measurement data using a CAD system, it is required that:

(i) the generated surface can sufficiently approximate the measurement data within a specified tolerance, and (ii) the generated surface has a smooth change in curvature. In particular, the requirement (ii) is extremely important not only in that item (ii) is important for an aesthetic property of the surface in design, but also in that the requirement (ii) leads to an impact when a consumer actually considers purchasing a product.

In the case of generation of a surface of an automobile, a surface model using the CAD for the clay model is reconstructed by considering the curve ruler as a profile curve and sweeping the profile curve along a certain flow. If both the profile curve and the flow of the profile curve are correctly expressed, it is possible to generate a high quality surface. However, in particular, it is very difficult to correctly express a curve representing the flow of the profile curve from the measurement data, and it is not easy to generate a high quality surface.

Note that, in the relate art, there are known some techniques of generating a surface by sweeping a profile curve along a curve serving as a guidance in the CAD or the like (for example, see Patent Documents 1 to 3). Although the curve serving as a guidance is called different names depending on documents (such as a control curve, a locus curve, or a feature line), they will be collectively called a "guide curve" hereinafter.

In the surface generation device of Patent Document 1, a free surface is generated by rotating and/or enlarging an input curve in a sweep position with a specified rotation amount and a magnification while sweeping the input curve along the guide curve in response to an instruction from a coordinate input device. In a three-dimensional surface shape generation device of Patent Document 2, by performing a sweeping process using an interpolation curve and a control vector in addition to the guide curve and the profile curve, an accurate swept surface can be generated even when a curvature change of the locus is severe. In a surface generation device of Patent Document 3, on a surface obtained by deforming and/or moving the profile curve along the guide curve, a surface that is smoothly connected to a support surface on the guide curve and passes through the support curve is generated.

There is also known a surface reproduction device configured to reproduce surface data on the basis of a line of curvature indicating a principal direction of meshes (for example, see Patent Document 4). In the surface reproduction device of Patent Document 4, a surface in a real space is mapped to a parameter space to calculate the first and second fundamental coefficients. Then, a line of curvature of the surface and real space coordinates where the line of curvature passes are calculated, so that real space coordinates of an intersection on the parameter space between a line passing through an inverse mapping target point on the parameter space and a line of curvature mapped to the parameter space are calculated. In addition, a curve on the real space passing through the calculated real space coordinates of the intersection is calculated, and a real space coordinate value of the inverse mapping target point on the curve is calculated on the basis of this curve, so that the surface data on the real space are reproduced.

In general, the sweep-based method is advantageous in that a control point can be intentionally regularly arranged. However, there is a problem that it is difficult to correctly specify the guide curve necessary for sweeping the profile curve from the measurement data. Since the quality of the surface generated on the basis of the sweep method largely depends on the quality of the guide curve to be specified, it is very important to appropriately express the guide curve. However, a method of calculating an appropriate guide curve has not be established, so that a CAD modeler is necessary to repeatedly adjust the guide curve through trial and error until the quality of the generated surface is secured. This necessitates a lot of time and effort.

In view of such a problem, the inventor has proposed a method capable of efficiently generating a high-quality surface without repeating a lot of trials and errors (for example, see Non-Patent Document 1). In the method described in Non-Patent Document 1, a profile curve fit to a part of the shape data of the clay model is set, the profile curve is translated and rotated so as to satisfy a condition that "a locus formed by a midpoint on a profile curve becomes a line of curvature of a surface to be generated", and a surface is generated by interpolation from a boundary of the surface defined by the locus of the moved profile curve.

In a case where the shape data of the clay model and the profile curve are set, and the guide curve required for sweeping the profile curve is unknown, when processing is performed based on the method described in Non-Patent Document 1, a surface corresponding to the swept profile curve is generated along a locus of one point on the profile curve (which corresponds to the guide curve). Here, since the locus corresponding to the guide curve is given as a line of curvature that represents the flow of the surface, it is possible to efficiently generate the high-quality surface in which the line of curvature representing the flow of the surface is used as a guide curve of the sweep method without repeating a lot of trials and errors many times.

Incidentally, when CAD data is generated from measurement data of a model representing an object or a shape thereof, it is necessary to generate CAD data of a plurality of surfaces corresponding to various surfaces of the object shape. In this case, not only generating the inside of each surface with high quality, but also finishing an intersecting curve between adjacent surfaces with high quality is required. However, even though Non-Patent Document 1 discloses that one profile curve which is set is swept to generate one high-quality surface, Non-Patent Document 1 fails to mention how to generate a plurality of adjacent surfaces in order to generate high-quality CAD data.

Note that, there are some known documents disclosing processing for making a boundary curve between two surfaces continuous (smooth) (for example, see Patent Documents 5 and 6). Patent Document 5 discloses a surface interpolation method capable of generating a surface that is smooth inside the surface and that maintains appropriate continuity with an external surface with respect to a boundary curve including a concave designed by a designer.

In a free surface generating method described in Patent Document 6, continuity at a boundary is determined from a boundary curve and a curve connected to each boundary curve, and a connection condition at the boundary is obtained from the obtained continuity. Then, an internal control point of a surface is generated from the obtained connection condition, and two adjacent free surface shapes are smoothly connected. In this way, it is possible to smoothly connect two surfaces having an NURBS curve as a shared boundary.

    Patent Document 1: Japanese Patent No. 2938909
    Patent Document 2: JP-A-5-250444
    Patent Document 3: JP-A-2000-11210
    Patent Document 4: JP-A-2005-149245
    Patent Document 5: JP-A-2000-194877
    Patent Document 6: JP-A-7-282117

Non-Patent Document 1: "Reconstruction of underlying surfaces from scanned data using lines of curvature", Shoichi Tsuchie (Computers & Graphics, Volume 68, November 2017, Pages 108-118)

Summary of the Invention

Technical Problem

The technologies described in Patent Documents 5 and 6 are based on the assumption that there is a boundary curve and smoothly connect a plurality of surfaces connected to the boundary curve with appropriate continuity. However, it is as difficult to first create an appropriate boundary curve from the measurement data as it is difficult to correctly specify the guide curve required for sweeping the profile curve from the measurement data. For this reason, even when the technologies described in Patent Documents 5 and 6 are used, it is difficult to generate a high-quality intersecting curve between a plurality of adjacent surfaces.

The invention has been made to solve such a problem, and an object of the invention is to allow efficient generation of a surface where an intersecting curve of adjacent surfaces has high quality without repeating a lot of trials and errors by a user.

Solution to Problem

To solve the above-mentioned problem, in the invention, a profile curve fit to a part of shape data of a model is set, the profile curve is translated and rotated to satisfy a predetermined condition, and a surface is generated by interpolation from a boundary curve defined by a locus of the moved profile curve. Here, the predetermined condition is set to a condition that adjacent surfaces mutually intersect each other and the magnitude of torsion of the intersecting curve is minimized.

Advantageous Effects of the Invention

According to the invention configured as described above, a torsion of an intersecting curve between a surface and a surface to be generated by movement of a profile curve is minimized. In this way, it is possible to efficiently generate a high-quality surface in which a torsion of an intersecting curve between adjacent surfaces is small, without repeating a lot of trials and errors.

Brief Description of the Drawings

Fig. 1 is a block diagram illustrating an exemplary functional configuration of a surface generation device according to a first embodiment.
Fig. 2 is a diagram illustrating an example of a surface generated by the surface generation device of the present embodiment.
Fig. 3 is a diagram illustrating an outline of a process of the surface generation device according to the first embodiment.
Fig. 4 is a diagram illustrating a processing content of a first movement processing unit according to the first embodiment.
Fig. 5 is a block diagram illustrating a modification of the surface generation device according to the first embodiment.
Fig. 6 is a block diagram illustrating a modification of the surface generation device according to the first embodiment.
Fig. 7 is a block diagram illustrating an exemplary functional configuration of a surface generation device according to a second embodiment.

Mode for Carrying Out the Invention

(First Embodiment)

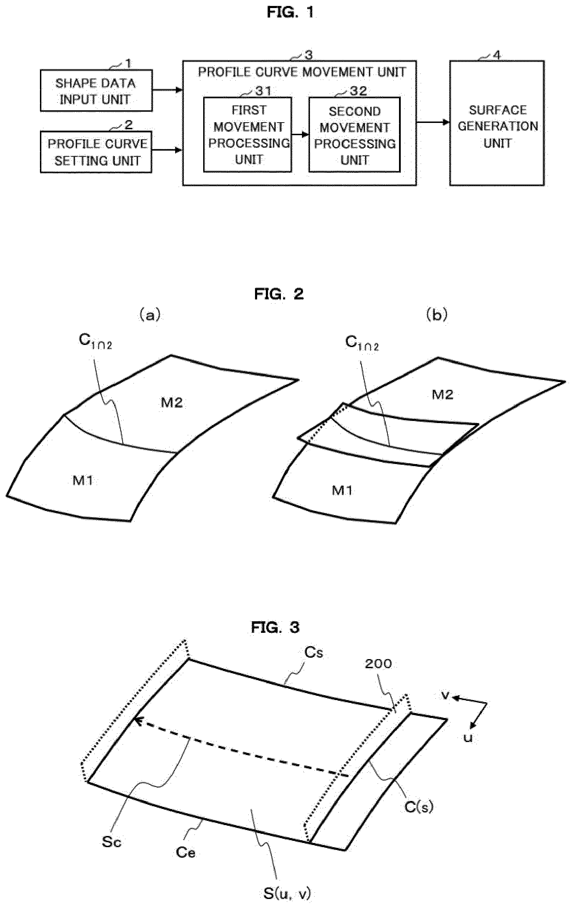

A first embodiment of the invention will now be described with reference to the accompanying drawings. Fig. 1 is a block diagram illustrating an exemplary functional configuration of a surface generation device according to the first embodiment. As illustrated in Fig. 1, a functional configuration of the surface generation device according to the first embodiment includes a shape data input unit 1, a profile curve setting unit 2, a profile curve movement unit 3, and a surface generation unit 4. The profile curve movement unit 3 has a first movement processing unit 31 and a second movement processing unit 32.

Each functional block 1 to 4 described above may be configured by any one of hardware, a digital signal processor (DSP), and software. For example, in the case of software, each functional block 1 to 4 described above includes a central processing unit (CPU), a random access memory (RAM), a read-only memory (ROM), or the like of a computer in practice, and is implemented by operating a program stored in a recording medium such as a RAM, a ROM, a hard disk, or a semiconductor memory.

Fig. 2 is a diagram illustrating an example of a surface generated by the surface generation device of the present embodiment. In the present embodiment, two adjacent surfaces M1 and M2 are generated. As illustrated in Fig. 2 (a), the two surfaces M1 and M2 are in contact with each other at an intersecting curve $C_{1 \cap 2}$. As illustrated in Fig. 2 (b), the intersecting curve $C_{1 \cap 2}$ is a curve formed by intersection between an underlying surface including the first surface M1 and an underlying surface including the second surface M2, and indicates a part of a boundary of a trimmed surface illustrated in Fig. 2(a). Note that, the underlying surface refers to a surface generated by interpolation from a boundary curve defined by a locus of a profile curve described later when the profile curve is swept.

In the present embodiment, as will be described in detail below, not only the insides of the individual surfaces M1 and M2 are generated with high quality, but also the intersecting curve $C_{1 \cap 2}$ between the adjacent surfaces has high quality. That is, by sweeping the set profile curve so as to satisfy a predetermined condition described later, surfaces M1 and M2 in which both the insides of the surfaces and the intersecting curve $C_{1 \cap 2}$ of the adjacent surfaces have high qualities are generated. Note that, in this specification, for the sake of convenience, generation of the two adjacent surfaces M1 and M2 will be described. However, three or more adjacent surfaces can be similarly generated.

The shape data input unit 1 inputs shape data of a model. In the present embodiment, the shape data input unit 1 inputs measurement data (point cloud data or polygonal data) regarding a shape of a clay model or the like. In particular, in the present embodiment, shape data including a plurality of surfaces adjacent to each other at an intersecting curve is input.

The profile curve setting unit 2 sets a profile curve fitted to a part of the shape data input by the shape data input unit 1. In the case of generating the two surfaces M1 and M2, the profile curve setting unit 2 sets a profile curve used to generate the first surface M1 and a profile curve used to generate the second surface M2. The profile curves set here are generated by emulating a curve ruler used by a designer (clay modeler) to generate a clay model of an automobile.

Fig. 3 is a diagram illustrating an outline of a process of the surface generation device according to the first embodiment. Note that, Fig. 3 illustrates an outline of processing of generating one surface (underlying surface including one of the first surface M1 or the second surface M2). Fig. 3 illustrates an example of a profile curve C(s) set by emulating a curve ruler 200 by the profile curve setting unit 2.

In the first embodiment, an objective surface (hereinafter, referred to as a "target surface") S(u, v) is generated by moving the profile curve C(s) fitted to a part of the shape data using the profile curve setting unit 2 as described below and performing interpolation from a boundary curves defined from the trajectories of endpoints of the profile curve C(s) formed by the movement. The target surface S(u, v) is an underlying surface including one of the first surface M1 or the second surface M2.

In the first embodiment, the target surface S(u, v) is represented by a B-spline surface. As illustrated in Fig. 3, a shape of the target surface S(u, v) in a u-direction can be perfectly characterized by the profile curve C(s) set by the profile curve setting unit 2. In addition, two boundary curves Cs and Ce for a v-direction of the target surface S(u, v) are defined as loci (or trajectories) obtained by moving both end points of the profile curve C(s).

The profile curve movement unit 3 performs a process for moving the profile curve C(s) initially set by the profile curve setting unit 2 to satisfy a predetermined condition. In the first embodiment, the profile curve C(s) is moved by the first and second movement processing units 31 and 32. In this case, the first movement processing unit 31 performs only translation, and the second movement processing unit 32 performs both translation and rotation. This processing will be described below in details.

The first movement processing unit 31 translates the profile curve C(s) initially set by the profile curve setting unit 2 so as to minimize an error from the shape data input by the shape data input unit 1, and obtains, at every predetermined interval, a tangent vector indicating a direction of a locus of translation of one point on the profile curve C(s). The one point on the profile curve C(s) is, for example, a midpoint of the profile curve C(s), but not limited thereto. The predetermined interval may be a fixed value set by the surface generation device in advance, or may be a variable value that can be designated by a user.

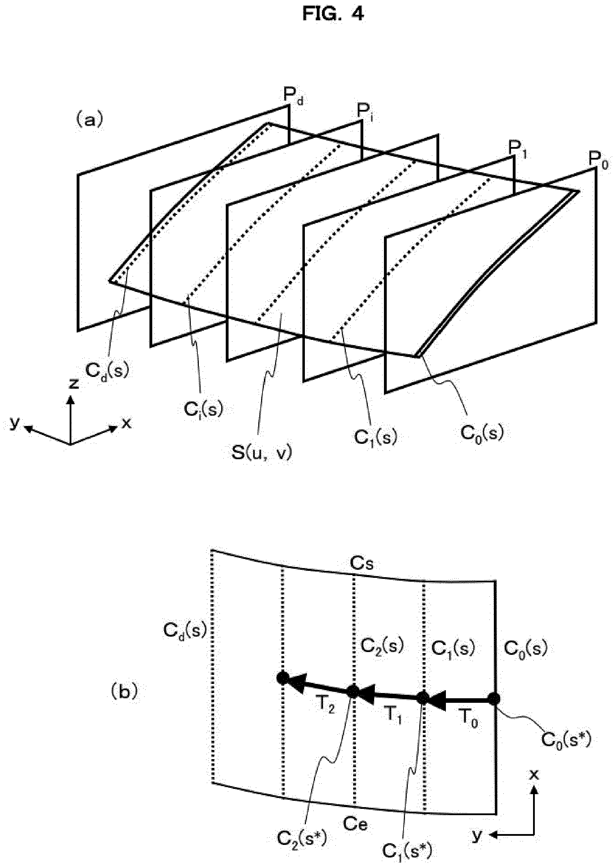

Fig. 4 is a diagram for describing a processing content of the first movement processing unit 31. An exemplary processing of the first movement processing unit 31 will now be described in details with reference to Fig. 4. That is, the first movement processing unit 31 translates the profile curve C(s) set to be fitted to a part of the shape data by the profile curve setting unit 2 in the following sequence.

First, the initially set profile curve C(s) is set as "$C_0(s)$", and the profile curve $C_0(s)$ is translated at predetermined intervals in a direction of a normal vector $T_0^\sim$ (not shown in Fig. 4) of a plane $P_0$ including the profile curve $C_0(s)$, so that the obtained moved profile curve C(s) is set as $C_1(S)^\sim$ (not shown in Fig. 4). Note that, if the profile curve $C_0(s)$ is simply translated in the direction of the normal vector $T_0^\sim$, the moved profile curve $C_1(s)^\sim$ may deviate from the shape data to generate an error. Therefore, the first movement processing unit 31 translates the profile curve $C_0(s)$ in the direction of the normal vector $T_0^\sim$ and then translates the profile curve $C_1(s)^\sim$ within a plane $P_1$ including the moved profile curve $C_1(s)^\sim$ to obtain "$C_1(s)$", so as to minimize an error between the profile curve $C_1(s)$ and the shape data. The plane $P_1$ is a plane parallel to the plane $P_0$.

Then, the moved profile curve C(s) obtained by translating the profile curve $C_1(s)$ at predetermined intervals in the direction of a normal vector $T_1^\sim$ (not shown in Fig. 4) of the plane $P_1$ including the moved profile curve $C_1(s)$ is set as "$C_2(s)^\sim$" (not shown in Fig. 4). In addition, the first movement processing unit 31 translates the profile curve $C_2(s)^\sim$ within a plane $P_2$ including the moved profile curve $C_2(s)^\sim$ to obtain "$C_2(s)$", so as to minimize an error between the profile curve $C_2(s)$ and the shape data. The plane $P_2$ is a plane parallel to the plane $P_1$.

This processing is executed repeatedly. In the example of Fig. 4, this processing is performed "d" times. As a result, the first movement processing unit 31 obtains a plurality of profile curves $C_i(s)$ (where i = 0 to d) existing at every predetermined interval, planes $P_i$ (where i = 0 to d) including each profile curve $C_i(s)$, and a plurality of tangent vectors $T_i$ (where i = 0 to d) for the movement directions of the profile curves $C_i(s)$.

As described above, for all of "i" (where i = 0 to d), if the profile curves $C_i(s)^\sim$ are simply translated in the same direction of the normal vector $T_0^\sim$ (in the case of $T_i = T_0^\sim$, where i = 0 to d), the profile curve $C_i(s)^\sim$ may be separated from the shape data, and the error may increase as the translation is repeated (as "i" increases).

In this regard, the first movement processing unit 31 translates the profile curve $C_i(s)$ in the direction of the normal vector of the plane $P_i$ (where i = 0 to d) and then further translates the translated profile curve $C_{i+1}(S)^\sim$ within the plane $P_{i+1}$, so as to minimize the error between the profile curve $C_{i+1}(s)$ and the shape data.

As a result, as illustrated in Fig. 4(b), it is difficult to say that "$T_i = T_0^\sim$ (where i = 0 to d)" at all times, so as to obtain a tangent vector $T_i$ (where i = 0 to d) satisfying a condition in which each profile curve $C_i(s)$ is best fitted to the shape data. The tangent vector $T_i$ obtained for each predetermined interval in this manner corresponds to a vector indicating a direction of the locus obtained by translating one point on the profile curve $C_i(s)$.

The second movement processing unit 32 sets the tangent vector $T_i$ (where i = 0 to d) calculated by the first movement processing unit 31 as an initial vector and further moves the profile curve $C_i(s)$ obtained at every predetermined interval through translation and rotation such that satisfies a predetermined condition. Here, the second movement processing unit 32 updates the tangent vector $T_i$ when translating the profile curve $C_i(s)$ and performs rotation on the basis of the updated tangent vector $T_i$.

In the first embodiment, as the predetermined condition, the following three conditions are established. That is, a first condition (corresponding to a second condition in the claims) is a condition for causing a locus formed by one point on a profile curve $C_i(s)'$ for every predetermined interval moved by the second movement processing unit 32 (corresponding to a guide curve if the profile curve C(s) were swept. Hereinafter, referred to as a "pseudo guide curve Sc" (see Fig. 3)) to approach a line of curvature having a small torsion.

A second condition corresponds to a first condition in the claims, and is a condition that adjacent surfaces generated by movement of the profile curve $C_i(s)'$ (profile curve used for generation of first surface M1 and profile curve used for generation of second surface M2) by the second movement processing unit 32 intersect each other, and a magnitude of a torsion of the intersecting curve $C_{1 \cap 2}$ is minimized.

A third condition corresponds to a fourth condition in the claims, and is a condition for minimizing an error between the target surface S(u, v) to be generated by the surface generation unit 4 and the surface expressed by the shape data input by the shape data input unit 1.

Hereinafter, three conditions when the second movement processing unit 32 performs movement processing of the profile curve $C_i(s)$ will be described in order. First, as a premise, rotational motion of the profile curve $C_i(s)$ will be described. The second movement processing unit 32 uses a point $C_i(s^*)$ on the profile curve $C_i(s)$ as a center of rotation to rotate the profile curve $C_i(s)$ by a rotation angle $\theta$ within the plane $P_i$ such that a tangent vector $T_{i-1}$ coincides with a next tangent vector $T_i$. Note that, the parameter s* is a value for giving one point (for example, a midpoint) on the profile curve $C_i(s)$. The rotation angle $\theta$ of the profile curve $C_i(s)$ is set to $\theta = \cos^{-1}(T_{i-1} \cdot T_i)$. In addition, the profile curve resulting from translational motion and rotational motion of the profile curve $C_i(s)$ by the second movement processing unit 32 will be referred to as $C_i(s)'$.

<First condition (second condition in the claims)>

Next, a description will be given of the first condition (second condition in the claims) when the profile curve $C_i(s)$ at each predetermined interval is translated and rotated. Here, in order to associate the action of the clay modeler for moving the curve ruler 200 smoothly with the characteristic of the target surface S(u, v), the following two conditions are assumed.

P1) The pseudo guide curve Sc means an intentional flow on the target surface S(u, v) to be generated, and the flow is specified as a line of curvature. The line of curvature indicates a flow of the surface with respect to the principal direction against the minimum principal curvature on the target surface S(u, v).
P2) The pseudo guide curve Sc has a small torsion.

The condition P1 is a condition in which the pseudo guide curve Sc as a locus formed by connecting one point $C_i(s^*)'$ on the profile curve $C_i(s)'$ at every predetermined interval moved on the basis of the translation and the rotation becomes a line of curvature of the target surface S(u, v) to be generated by the surface generation unit 4.

The condition P2 is a condition in which the angle from the normal vector of the target surface S(u, v) to be generated by the surface generation unit 4 to the principal normal vector of the pseudo guide curve Sc becomes constant on the locus of the pseudo guide curve Sc.

Note that the surface generation unit 4 generates a surface by interpolation from boundary curves defined by the loci (or trajectories) of the endpoints of the profile curve C(s)' moved by the profile curve movement unit 3. That is, the surface generation unit 4 generates the target surface S(u, v) by interpolation from the four sides using two profile curves $C_0(s)'$ and $C_d(s)'$ for the u-direction at the start point and the end point of the movement and two boundary curves Cs' and Ce' for the v-direction, for example, on the basis of the Coons patch known in the art.

The second movement processing unit 32 performs a process of causing the pseudo guide curve Sc to approach the line of curvature in order to satisfy the condition P1. Here, the line of curvature is given in the following (Formula 1).

$$(EM-FL)du^2 + (EN-GL)dudv + (FN-GM)dv^2 = 0 \quad ... \quad (Formula\ 1)$$

Here, "E", "F", and "G" are coefficients of the first fundamental form (first fundamental magnitude) of the surface, and "L", "M", and "N" are coefficients of the second fundamental form (second fundamental magnitude) of the surface.

Since the pseudo guide curve Sc is an isoparametric curve "S(u*, v) (C(s*) = S(u*, 0))" in the v-direction on the target surface S(u, v) corresponding to the locus of one point C(s*) of the profile curve, the condition $P_1$ can be expressed as the following (Formula 2) by setting "du = 0". In this (Formula 2), "$V_N$" denotes a normal vector of the target surface S(u, v).

[Equation 1]

$$\psi(u^*, v) = FN - GM$$
$$= S_u(u^*, v_i) \cdot S_v(u^*, v_i) V_N(u^*, v_i) \cdot S_{vv}(u^*, v_i)$$
$$- \left| S_v(u^*, v_i) \right|^2 V_N(u^*, v_i) \cdot S_{uv}(u^*, v_i)$$
$$= 0 \qquad \qquad \ldots \text{(Formula 2)}$$

Next, the condition P2 will be described. A geodesic torsion $\tau_g$ of a certain curve C on the surface is given by the following (Formula 3).

$$\tau_g = (d\alpha/ds) - \tau \ldots \text{(Formula 3)}$$

Here, "$\tau$" denotes an ordinary torsion of the curve C, and "$\alpha$" denotes the angle from the normal vector $V_N$ of the surface to the principal normal vector of the curve C. In addition, "$\tau_g = 0$" on lines of curvature. Therefore, the pseudo guide curve Sc becomes a curve having a small torsion $\tau$ by reducing the "$d\alpha/ds$" as small as possible in order to satisfy the condition P2.

In the aforementioned description, for the second condition, the pseudo guide curve Sc becomes the line of curvature on the target surface S(u, v), and the pseudo guide curve Sc has the small torsion $\tau$. This is evaluated by the function $\psi$ of the following (Formula 4). Here, "$w_1$" and "$w_2$" denote weighting coefficients. In addition, "$N_2$" denotes the number of the sampling points on the pseudo guide curve Sc. These sampling points are preferably extracted uniformly from the pseudo guide curve Sc.

[Equation 2]

$$\Psi = w_1 \sum_{i=0}^{N_2} \left| \psi(u^*, v_i) \right|^2 + w_2 \sum_{i=1}^{N_2} \left| \alpha_i - \alpha_{i-1} \right|^2 \qquad \ldots \text{(Formula 4)}$$

<Second condition (first condition in the claims)>

Next, the second condition (first condition in the claims) will be described. The first condition is a condition that adjacent surfaces generated by movement of the profile curve $C_i(s)$' by the second movement processing unit 32 intersect each other, and the magnitude of a torsion of the intersecting curve $C_{1 \cap 2}$ is minimized.

With regard to the first condition, the fact that the magnitude of a torsion $\tilde{\tau}$ of the intersecting curve $C_{1 \cap 2}$ formed on the target surface S(u, v) is small is evaluated by a function $\Omega$ shown in the following (Formula 5). Here, $w_3$ is a weighting factor.

[Equation 3]

$$\Omega = w_3 \sum_{i=0}^{N} \left| \tau_i^{\sim} \right|^2 \qquad \ldots \text{(Formula 5)}$$

<Third condition (fourth condition in the claims)>

Next, the third condition (fourth condition in the claims) will be described. The fourth condition is a condition for minimizing an error between the target surface S(u, v) to be generated by the surface generation unit 4 and the surface expressed by the shape data input by the shape data input unit 1.

For the fourth condition, whether or not an error between the target surface S(u, v) and each sampling point $Q_i$ on the shape data is small is evaluated on the basis of the following (Formula 6). Here, "N" denotes the number of

the sampling points $Q_i$ extracted from the shape data. Note that the sampling points $Q_i$ is preferably extracted from whole of the shape data uniformly and is appropriately extracted so as to extend over the entire surface.
[Equation 4]

$$\sum_{i=1}^{N} (S(u_i, v_i) - Q_i)^2 \qquad \ldots \text{(Formula 6)}$$

Considering the first condition, second condition, and fourth condition described above, the second movement processing unit 32 moves the profile curve C(s) to minimize the objective function J as defined in the following (Formula 7).
[Equation 5]

$$J = \sum_{i=1}^{N} (S(u_i, v_i) - Q_i)^2 + \Psi + \Omega \qquad \ldots \text{(Formula 7)}$$

As described above in details, if the processing of the first embodiment is executed by inputting the shape data of a clay model or the like and the profile curve C(s) fitted to the shape data, the locus (pseudo guide curve Sc) defined by the locus of one point on the profile curve C(s) by moving the profile curve C(s) in order to generate the target surface S(u, v) can be expressed as a line of curvature indicating a flow of the surface of the principal direction with respect to the minimum principal curvature on the target surface S(u, v) to be generated from the model shape, and the torsion of the intersecting curve $C_{1 \cap 2}$ of the two surfaces M1 and M2 can be minimized.

That is, according to the first embodiment, unlike the sweep method of the related art which requires the guide curve to be given in advance as input data, if the shape data and the profile curve C(s) are given, a target surface S(u, v) having a property that the locus of the one point C(s*) caused by the movement of the curve C(s) becomes the line of curvature of the target surface S(u, v) to be generated and the torsion of the locus is small, and having a property that the intersecting curve $C_{1 \cap 2}$ of the adjacent surfaces has a small torsion is generated. In other words, it is possible to efficiently generate an excellent target surface S(u, v) in which the pseudo guide curve Sc becomes a line of curvature having a small torsion and the intersecting curve $C_{1 \cap 2}$ becomes a curve having a small torsion without trial and error many times.

Note that, in the first embodiment, only the condition $P_1$ in which the pseudo guide curve Sc becomes the line of curvature of the target surface S(u, v) may be used as the first condition by setting the weighting factor $w_2$ of (Formula 5) to zero. Even when only the condition P1 is employed, it is possible to avoid the torsion of the pseudo guide curve Sc from increasing explicitly.

Although, in the first embodiment, an example of generating a target surface S(u, v) from the measurement data of a clay model or the like of an automobile has been described, the shape data used as the input data is not limited to the measurement data of the clay model. For example, the target surface S(u, v) may be generated from measurement data of a commercial vehicle. In addition, the shape data is not limited to the measurement data, but may be CAD data or discrete approximation thereof. Furthermore, the target model is not limited to the automobile, but may include all types of articles.

In addition, in the first embodiment, a description has been given of an example in which a positions of each profile curve $C_i$(s) are adjusted to satisfy the fourth condition for minimizing the error between the target surface S(u, v) to be generated and the shape data of the clay model or the like in addition to the second condition for making the pseudo guide curve Sc the line of curvature having a small torsion and the first condition for the intersecting curve $C_{1 \cap 2}$ to be the curve having a small torsion. However, in (Formula 7), weighting factors may be set for a first term representing the fourth condition, a second term representing the second condition, and a third term representing the first condition so that the weight of each condition can be adjusted.

For example, in a case where, as the input data, CAD data representing a design concept to be generated anew instead of the measurement data for a real model is input from the shape data input unit 1 to generate the target surface S(u, v), or the like, it is possible to reduce the weight of the fourth condition and perform the processing. Further, in the case of generating only one surface instead of generating the two surfaces M1 and M2, it is also possible to perform processing by setting the weight of the first condition to zero. In addition, it is also possible to perform processing by setting the weight of the second condition to zero. In this case, it is possible to efficiently generate at least the target surface S(u, v) in which the torsion of the intersecting curve $C_{1 \cap 2}$ becomes small without repeating a lot of trials and errors.

Note that, in the first embodiment, the two surfaces M1 and M2 can be simultaneously generated in consideration of the first condition, the second condition, and the fourth condition, or can be generated in order. When the two surfaces M1 and M2 are generated at the same time, the profile curve setting unit 2 sets the profile curve for the first surface M1 and the profile curve for the second surface M2 at once. Then, the profile curve movement unit 3 moves the two profile curves so that the intersecting curve $C_{1 \cap 2}$ between the underlying surface generated by movement of the profile curve for the first surface M1 and the underlying surface generated by movement of the profile curve for the second surface M2 satisfies the first condition, and the surface generation unit 4 interpolates a resultant locus, thereby generating two underlying surfaces having the intersecting curve $C_{1 \cap 2}$ which has a small torsion. Thereafter, the two surfaces M1 and M2 are generated by performing a trimming process.

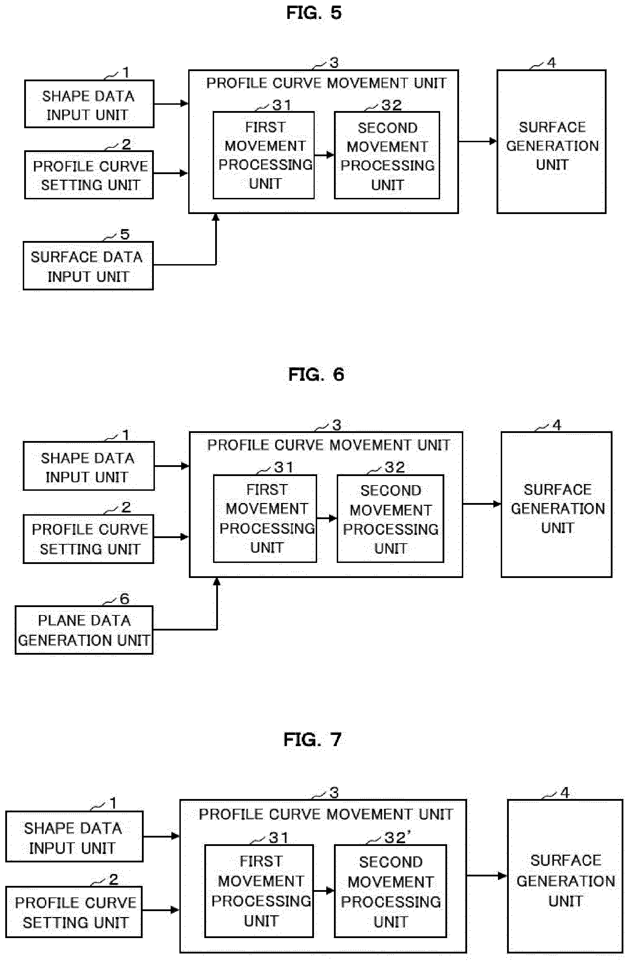

On the other hand, when the two surfaces M1 and M2 are generated in order, the surface generation device further includes a surface data input unit 5 as illustrated in Fig. 5. The surface data input unit 5 inputs surface data representing another surface (a surface generated earlier) adjacent to a surface to be generated (surface generated later). For example, in a case where the first surface M1 is generated first, and then the second surface M2 is generated, when the underlying surface including the first surface M1 is generated, the surface data is not input from the surface data input unit 5, and the profile curve setting unit 2 sets the profile curve for the first surface M1 to execute the processing described above. However, at this time, the second condition does not need to be considered (the processing can be performed by setting the weight of the first condition to zero).

Subsequently, when the second surface M2 is generated, the profile curve for the second surface M2 is set by the profile curve setting unit 2, and surface data of the underlying surface including the first surface M1 is input from the surface data input unit 5. Then, the first condition is applied to a curve becoming the intersecting curve $C_{1 \cap 2}$ between the underlying surface generated when the profile curve for the second surface M2 is moved and the underlying surface including the first surface M1 input from the surface data input unit 5 to move the profile curve for the second surface M2, and a resultant locus is interpolated by the surface generation unit 4, thereby generating an underlying surface including the second surface M2 having the intersecting curve $C_{1 \cap 2}$ which has a small torsion. Thereafter, the two surfaces M1 and M2 are generated by performing a trimming process.

Incidentally, in the shape data input by the shape data input unit 1, there is a case where a certain surface is an end surface and there is no other surface adjacent thereto, that is, there is no other surface shape data. In this case, there is a need to make the torsion of the curve, corresponding to the intersecting curve assuming that there is a surface adjacent to the certain surface, close to zero. In order to meet such a need, as illustrated in Fig. 6, a plane data generation unit 6 may be provided instead of the surface data input unit 5 of Fig. 5. Note that, naturally, the plane data generation unit 6 may be provided in addition to the surface data input unit 5.

The plane data generation unit 6 generates plane data representing a plane that intersects a surface to be generated as an end surface. For example, it is presumed that the first surface M1 is an end surface and no other surface adjacent to the first surface M1 is present on a boundary curve Cs side. In this case, first, the plane data generation unit 6 does not generate plane data, and the profile curve setting unit 2 sets the profile curve for the first surface M1 to execute the processing described above, thereby provisionally generating the underlying surface including the first surface M1. However, at this time, the second condition does not need to be taken into consideration (the processing can be performed by setting the weight of the second condition to zero).

Thereafter, the plane data generation unit 6 generates plane data representing a plane intersecting the first surface M1. For example, the plane data generation unit 6 obtains three optimum points that define the plane so that the intersecting curve between the first surface M1 and the plane becomes a desired boundary curve, and generates a plane passing through the three points. Alternatively, the plane data generation unit 6 may generate the plane intersecting the first surface M1 by performing plane fitting on a point group that is an end portion of the first surface M1 using the method of least squares.

Then, the profile curve movement unit 3 uses a condition that a plane curve formed by intersection of a plane generated by the plane data generation unit 6 and a surface temporarily generated for the first surface M1 to be generated is used as a reference curve (a pseudo intersecting curve) to minimize an error between the intersecting curve $C_{1 \cap 2}$ of the first surface M1 to be generated and the reference curve as the first condition to move the profile curve. The intersecting curve $C_{1 \cap 2}$ formed by intersection of the plane generated by the plane data generation unit 6 and the surface temporarily generated for the first surface M1 to be generated is the plane curve. The torsion of the plane curve is zero. Therefore, the condition that the magnitude of the torsion of the intersecting curve $C_{1 \cap 2}$ is minimized does not need to be taken into consideration.

Here, whether or not the error between the reference curve and the intersecting curve $C_{1 \cap 2}$ of the first surface M1 is minimized is evaluated by the following (Formula 8). Here, $C_{1 \cap 2\_i}$ denotes a sampling point extracted from the intersecting curve $C_{1 \cap 2}$ of the first surface M1 to be generated, $C_{1 \cap 2\_i}^{Rf}$ denotes a sampling point extracted from the reference curve, and N denotes the number of sampling points $C_{1 \cap 2\_i}^{Rf}$ and $C_{1 \cap 2\_i}$ extracted from the reference curve $C_{1 \cap 2}^{Rf}$ and the intersecting curve $C_{1 \cap 2}$ of the first surface M1 to be generated, respectively. Note that, it is preferable that the sampling points $C_{1 \cap 2\_i}^{Rf}$ and $C_{1 \cap 2\_i}$ are extracted from the entire reference curve $C_{1 \cap 2}^{Rf}$ and intersecting curve $C_{1 \cap 2}$ without any bias.
[Equation 6]

$$\sum_{i=0}^{N} \left\| \mathbf{C}_{1\cap2\_i} - \mathbf{C}_{1\cap2\_i}{}^{Rf} \right\|^{2}$$

$$\ldots \quad (\text{Formula } 8)$$

By moving the profile curve using the condition that the plane curve formed by intersection of the plane generated by the plane data generation unit 6 and the surface temporarily generated for the first surface M1 to be generated is used as the reference curve $C_{1\cap2}{}^{Rf}$ (pseudo intersecting curve) to minimize an error between the reference curve $C_{1\cap2}{}^{Rf}$ and the intersecting curve $C_{1\cap2}$ of the first surface M1 as the first condition, the curve corresponding to the intersecting curve of the first surface M1 that is the end surface can be a curve having a small torsion.

(Second Embodiment)

Next, a second embodiment according to the invention will be described with reference to the accompanying drawings. Fig. 7 is a block diagram illustrating an exemplary functional configuration of a surface generation device according to the second embodiment. Note that, in Fig. 7, like reference numerals denote like elements as in Fig. 1, and they will not be described here repeatedly. The surface generation device according to the second embodiment has a second movement processing unit 32' instead of the second movement processing unit 32.

In the first embodiment described above, an example in which the positions of each profile curve $C_i(s)'$ are adjusted to satisfy the first condition and the second condition such that the locus of the one point $C_i(s^*)'$ on each profile curve $C_i(s)'$ formed by moving the profile curve $C(s)$ becomes a line of curvature having a small torsion on the target surface $S(u, v)$ and a locus of another point on each profile curve $C_i(s)'$ becomes a curve having a small torsion in order to improve the quality of the target surface $S(u, v)$ to be reconstructed from the shape data (measurement data of a clay model or the like) has been described.

In addition, in the second embodiment, the positions of each profile curve $C_i(s)$ are adjusted by imposing a third condition to the boundary curves Cs and Ce in the v-direction of the target surface $S(u, v)$. The third condition is a condition in which the boundary curves Cs' and Ce' have curvature monotonicity.

That is, in the translation of the profile curve $C(s)$ performed by the first movement processing unit 31 and the translation and rotation of the profile curve $C(s)$ performed by the second movement processing unit 32, the two boundary curves Cs and Ce defining the v-direction of the surface $S(u, v)$ generated accordingly are obtained just by interpolation or approximation for both end points of a plurality of profile curves $C_i(s)$ (where i = 0 to d), and it is not guaranteed that the curvature monotonicity desired in the design is satisfied. Therefore, an optimum tangent vector $T_i$ is calculated by minutely adjusting each profile curve $C_i(s)$ within the plane $P_i$ such that both the boundary curves Cs and Ce have curvature monotonicity.

In a case where the curvatures of the two boundary curves Cs (= S(0, v)) and Ce (= S(1, v)) in the v-direction of the surface $S(u, v)$ monotonically increase, the function $\phi$ expressed in the following (Formula 9) is introduced for evaluation. Here, "$\kappa_i$" denotes a curvature in each sampling point set at equal intervals on each of the boundary curves Cs and Ce, and $\delta(\kappa_i)$ denotes a penalty function defined in (Formula 10). The first term of (Formula 9) defines curvature monotonicity for the boundary curve Cs, and the second term defines curvature monotonicity for the other boundary curve Ce. "$N_1$" denote the number of the sampling points.

[Equation 7]

$$\Phi = \sum_{i=1}^{N_1} \delta(\kappa_i) + \sum_{i=1}^{N_1} \delta(\kappa_i)$$

$$\ldots \quad (\text{Formula } 9)$$

$$\delta(\kappa_i) = \begin{cases} 0 & \text{if } \kappa_i - \kappa_{i-1} > 0 \\ \left|\kappa_i - \kappa_{i-1}\right| & \text{otherwise} \end{cases}$$

$$\ldots \quad (\text{Formula } 10)$$

In the second embodiment, the second movement processing unit 32' moves the profile curve $C(s)$ such that the objective function J defined in (Formula 11) instead of (Formula 7) is minimized. Here, "$\varepsilon_1$", "$\varepsilon_2$" and "$\varepsilon_3$" are weighting factors.

[Equation 8]

$$J = \sum_{i=1}^{N} (S(u_i, v_i) - Q_i)^2 + \epsilon_1 \Phi + \epsilon_2 \Psi + \epsilon_3 \Omega$$

$$\ldots \text{(Formula 11)}$$

According to the second embodiment configured as described above, the locus of one point $C_i(s*)'$ (for example, midpoint) on the profile curve $C_i(s)'$ becomes a desirable curve (a line of curvature having a small torsion) as the pseudo guide curve Sc, and each boundary curve Cs' and Ce' formed by the locus of both end points of the profile curve $Ci(s)'$ becomes a curve having curvature monotonicity. Since each boundary curve Cs' and Ce' has curvature monotonicity, the pseudo guide curve Sc also has curvature monotonicity. For this reason, it is possible to further improve the quality of the target surface S(u, v) reconstructed from the shape data.

Note that, even in the second embodiment, similar to the first embodiment, only the condition $P_1$ may be used as the first condition by setting the weighting coefficient $w_2$ of (Formula 4) to zero. In addition, the shape data serving as the input data is not limited to measurement data of a clay model or the like, but may include CAD data or discrete approximation thereof. Furthermore, in (Formula 11), the weighting factor may also be set for the first term indicating the fourth condition.

In addition, the modification illustrated in Fig. 4 or 5 can be applied to the second embodiment.

Although, in the first and second embodiments, an example in which the target surface S(u, v) to be generated by the surface generation unit 4 is expressed on a B-spline surface has been described, the invention is not limited thereto. For example, the target surface S(u, v) may also be expressed on the Bezier surface.

Although, in the first and second embodiments, an example in which the profile curve C(s) is set by emulating the curve ruler 200 used to generate a clay model has been described, the invention is not limited thereto. That is, the profile curve C(s) may be set to match the shape of the target surface S(u, v) to be generated.

Although, in the first and second embodiments, an example in which the movement of the profile curve C(s) is performed in two stages dividingly into the first and second movement processing units 31 and 32 has been described, the invention is not limited thereto. That is, the movement of the profile curve C(s) may be performed in a single stage by rotating the profile curve C(s) while translating it at predetermined intervals.

Although, in the first and second embodiments, the target surface S(u, v) is generated by interpolation from the boundary curves by using the Coons patch, the invention is not limited thereto. For example, all of the aforementioned discussions may be applicable even by approximating the locus of one point C(s*) (for example, midpoint) on the profile curve C(s) using the B-spline curve or the like and sweeping the profile curve C(s) along the approximated curve.

Although, in the first and second embodiments, an example in which, for the processing of the first movement processing unit 31, the profile curve $C_i(s)$ is translated in the direction of the normal vector of the plane $P_i$, and the translated profile curve $C_{i+1}(s)^\sim$ is further translated within the plane $P_{i+1}$ has been described, the translation may be performed only for the normal vector direction. In this case, the tangent vector $T_i$ that minimizes the error between the profile curve $C_{i+1}(s)$ and the shape data is not generated as an initial vector. However, through optimization computation using the second movement processing unit 32, the target surface S(u, v) satisfying the first to fourth conditions can be generated. Note that, since the first movement processing unit 31 generates the tangent vector $T_i$ that minimizes the error between the profile curve $C_{i+1}(s)$ and the shape data as an initial vector, it is possible to shorten a processing time for optimization computation of the second movement processing unit 32 advantageously.

Any one of the first and second embodiments is just illustrative purposes for specifying the best modes of the invention, and they are not to be construed as a limitative sense in the technical scope of the invention. That is, the invention may be embodied in various manners without departing from the gist and scope thereof.

Reference Signs List

| | |
|---|---|
| 1 | Shape data input unit |
| 2 | Profile curve setting unit |
| 3 | Profile curve movement unit |
| 4 | Surface generation unit |
| 5 | Surface data input unit |
| 6 | Plane data generation unit |
| 31 | First movement processing unit |
| 32, 32' | Second movement processing unit |

**Claims**

1. A surface generation device comprising:

    a shape data input unit configured to input shape data of a model;
    a profile curve setting unit configured to set a profile curve fitted to a part of the shape data;
    a profile curve movement unit configured to translate and rotate the profile curve set by the profile curve setting unit so as to satisfy a predetermined condition; and
    a surface generation unit configured to generate a surface defined by a locus obtained by moving the profile curve using the profile curve movement unit,
    wherein the predetermined condition is a first condition that a magnitude of a torsion of an intersecting curve between surfaces generated by movement of the profile curve by the profile curve movement unit is minimized.

2. The surface generation device according to claim 1, wherein the predetermined condition further includes a second condition that a pseudo guide curve defined by a locus of one point on the profile curve moved by the profile curve movement unit becomes a line of curvature of a surface to be generated.

3. The surface generation device according to claim 2, wherein the second condition is a condition that the pseudo guide curve becomes the line of curvature of the surface to be generated, and an angle from a normal vector of the surface generated by the surface generation unit to a principal normal vector of the pseudo guide curve becomes constant on a locus of the pseudo guide curve.

4. The surface generation device according to any one of claims 1 to 3, wherein the predetermined condition further includes a third condition that a curve of a boundary curve has curvature monotonicity.

5. The surface generation device according to any one of claims 1 to 4, wherein the predetermined condition further includes a third condition in which an error between the surface to be generated by the surface generation unit and a surface expressed by the shape data input by the shape data input unit is minimized.

6. The surface generation device according to any one of claims 1 to 5, further comprising
    a surface data input unit for inputting surface data representing another surface adjacent to the surface to be generated,
    wherein the first condition is a condition that a magnitude of a torsion of an intersecting curve with the other surface input by the surface data input unit is minimized.

7. The surface generation device according to any one of claims 1 to 5, further comprising
    a plane data generation unit for generating plane data that represents a plane intersecting the surface to be generated,
    wherein the first condition is a condition that a plane curve formed by intersection of the plane generated by the plane data generation unit and a surface temporarily generated for the surface to be generated is used as a reference curve to minimize an error between the reference curve and an intersecting curve of the surface to be generated.

8. A surface generation program that causes a computer to function as:

    shape data input means configured to input shape data of a model;
    profile curve setting means configured to set a profile curve fitted to a part of the shape data;
    profile curve movement means configured to translate and rotate the profile curve set by the profile curve setting means so as to satisfy a predetermined condition; and
    surface generation means configured to generate a surface defined by a locus obtained by moving the profile curve using the profile curve movement means,
    wherein the predetermined condition is a first condition that a magnitude of a torsion of an intersecting curve between surfaces generated by movement of the profile curve by the profile curve movement means is minimized.

## FIG. 1

```
┌─────────────┐ ~1    ┌──────────────────────────────────────┐ ~3   ┌──────────────┐ ~4
│ SHAPE DATA  │────→  │      PROFILE CURVE MOVEMENT UNIT       │      │              │
│ INPUT UNIT  │       │   ┌───────────┐~31  ┌───────────┐~32   │      │   SURFACE    │
└─────────────┘       │   │  FIRST    │     │  SECOND   │      │────→ │  GENERATION  │
                      │   │ MOVEMENT  │────→│ MOVEMENT  │      │      │     UNIT     │
┌─────────────┐ ~2    │   │PROCESSING │     │PROCESSING │      │      │              │
│PROFILE CURVE│────→  │   │  UNIT     │     │  UNIT     │      │      │              │
│ SETTING UNIT│       │   └───────────┘     └───────────┘      │      └──────────────┘
└─────────────┘       └──────────────────────────────────────┘
```

## FIG. 2

(a)

$C_{1 \cap 2}$

M2

M1

(b)

$C_{1 \cap 2}$

M2

M1

## FIG. 3

Cs

200

v

u

Sc

Ce

C(s)

S(u, v)

# FIG. 4

(a)

(b)

## FIG. 5

```
┌──────────────┐        ┌─────────────────────────────────┐     ┌──────────────┐
│      ⌒1      │        │              ⌒3                 │     │      ⌒4      │
│ SHAPE DATA   │───────▶│ PROFILE CURVE MOVEMENT UNIT     │     │              │
│ INPUT UNIT   │        │   ⌒31          ⌒32              │     │              │
│              │        │ ┌──────────┐ ┌──────────┐       │     │  SURFACE     │
└──────────────┘        │ │ FIRST    │ │ SECOND   │       │     │ GENERATION   │
                        │ │ MOVEMENT │ │ MOVEMENT │       │────▶│   UNIT       │
┌──────────────┐        │ │PROCESSING│▶│PROCESSING│       │     │              │
│      ⌒2      │        │ │ UNIT     │ │ UNIT     │       │     │              │
│ PROFILE CURVE│───────▶│ └──────────┘ └──────────┘       │     └──────────────┘
│ SETTING UNIT │        │                                 │
│              │        └─────────────────────────────────┘
└──────────────┘             ▲
                             │
┌──────────────┐             │
│      ⌒5      │             │
│ SURFACE DATA │─────────────┘
│ INPUT UNIT   │
└──────────────┘
```

## FIG. 6

```
┌──────────────┐        ┌─────────────────────────────────┐     ┌──────────────┐
│      ⌒1      │        │              ⌒3                 │     │      ⌒4      │
│ SHAPE DATA   │───────▶│ PROFILE CURVE MOVEMENT UNIT     │     │              │
│ INPUT UNIT   │        │   ⌒31          ⌒32              │     │              │
│              │        │ ┌──────────┐ ┌──────────┐       │     │  SURFACE     │
└──────────────┘        │ │ FIRST    │ │ SECOND   │       │     │ GENERATION   │
                        │ │ MOVEMENT │ │ MOVEMENT │       │────▶│   UNIT       │
┌──────────────┐        │ │PROCESSING│▶│PROCESSING│       │     │              │
│      ⌒2      │        │ │ UNIT     │ │ UNIT     │       │     │              │
│ PROFILE CURVE│───────▶│ └──────────┘ └──────────┘       │     └──────────────┘
│ SETTING UNIT │        │                                 │
│              │        └─────────────────────────────────┘
└──────────────┘             ▲
                             │
┌──────────────┐             │
│      ⌒6      │             │
│ PLANE DATA   │─────────────┘
│GENERATION UNIT│
└──────────────┘
```

## FIG. 7

```
┌──────────────┐        ┌─────────────────────────────────┐     ┌──────────────┐
│      ⌒1      │        │              ⌒3                 │     │      ⌒4      │
│ SHAPE DATA   │───────▶│ PROFILE CURVE MOVEMENT UNIT     │     │              │
│ INPUT UNIT   │        │   ⌒31          ⌒32'             │     │              │
│              │        │ ┌──────────┐ ┌──────────┐       │     │  SURFACE     │
└──────────────┘        │ │ FIRST    │ │ SECOND   │       │     │ GENERATION   │
                        │ │ MOVEMENT │ │ MOVEMENT │       │────▶│   UNIT       │
┌──────────────┐        │ │PROCESSING│▶│PROCESSING│       │     │              │
│      ⌒2      │        │ │ UNIT     │ │ UNIT     │       │     │              │
│ PROFILE CURVE│───────▶│ └──────────┘ └──────────┘       │     └──────────────┘
│ SETTING UNIT │        │                                 │
│              │        └─────────────────────────────────┘
└──────────────┘
```

## INTERNATIONAL SEARCH REPORT

International application No.

PCT/JP2019/003634

### A. CLASSIFICATION OF SUBJECT MATTER
Int.Cl. G06F17/50(2006.01)i

According to International Patent Classification (IPC) or to both national classification and IPC

### B. FIELDS SEARCHED

Minimum documentation searched (classification system followed by classification symbols)
Int.Cl. G06F17/50

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | TSUCHIE, Shoichi, Reconstruction of underlying surfaces from scanned data using lines or curvature, Computers & Graphics, November 2017, vol. 68, pp. 108-118, <DOI: 10.1016/j.cag.2017.08.015>, particularly, p. 110, right column, l. 16 to p. 112, right column, l. 12 | 1–8 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02.04.2019 | 16.04.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2019/003634

C (Continuation).   DOCUMENTS CONSIDERED TO BE RELEVANT

| Category* | Citation of document, with indication, where appropriate, of the relevant passages | Relevant to claim No. |
|---|---|---|
| A | 伊丹裕美ほか，３次元位置センサを用いた直観的制御による対数美的曲面創成システムの開発，情報処理学会研究報告 平成22年度 6 [DVD-ROM], 15 April 2011, vol. 2011-CG-142, no. 13, pp. 1-5, ISSN 1884-0930, particularly, p. 3, left column, ll. 12-16, (ITAMI, Hiromi et al., A generation system of a log-aesthetic curved surface by intuitive control using the location sensor, IPSJ SIG Technical Report, 2010) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2938909 B
- JP 5250444 A
- JP 2000011210 A
- JP 2005149245 A
- JP 2000194877 A
- JP 7282117 A

**Non-patent literature cited in the description**

- Reconstruction of underlying surfaces from scanned data using lines of curvature. *Shoichi Tsuchie (Computers & Graphics,* November 2017, vol. 68, 108-118